# DEMANDE DE BREVET EUROPEEN

(11) **EP 1 652 761 A2**
(43) Date de publication de la demande: **03.05.2006**
(21) Numéro de dépôt: 05300868.6
(22) Date de dépôt: 26.10.2005
(51) Int. Cl.: B62J 7/08, B62J 35/00, B62J 9/00

(54) **Dispositif universel d'arrimage d'au moins un accessoire à une motocyclette**

(30) Priorité: 27.10.2004 FR 0452460
(71) Demandeur: Plastex, 95870 Bezons (FR)
(72) Inventeur: De Roaldes, Olivier, 92700 Colombes (FR); Pieron, Isabelle, 75010 Paris (FR); Boucheny, Frédéric, 60240 Blequencourt (FR)
(74) Mandataire: Schmit, Christian Norbert Marie

(57) **Abrégé**

Pour arrimer un accessoire (801) à une motocyclette on dote ladite motocyclette d'une première interface universelle d'arrimage, cette première interface étant apte à coopérer avec une deuxième interface fixée à l'accessoire. La première interface est fixée à la motocyclette en utilisant le bouchon de réservoir (101). La première interface est telle qu'elle s'adapte à tous les modèles de réservoir. La première interface est aussi apte à coopérer avec une deuxième interface d'un accessoire pour l'arrimage de l'accessoire.

## Description

La présente invention a pour objet un dispositif universel d'arrimage d'au moins un accessoire à une motocyclette. Le domaine de l'invention est celui des véhicules à deux roues motorisés, et plus généralement de tous les véhicules comportant un réservoir situé devant le pilote dudit véhicule et entre les jambes dudit pilote. Ce domaine inclut au moins les motos à deux, trois et quatre roues, ainsi que les scooters. Plus spécifiquement le domaine de l'invention est celui de l'arrimage d'accessoires à de tels véhicules.

Un but de l'invention est de simplifier l'arrimage d'accessoires optionnels sur une motocyclette. Les accessoires optionnels sont au moins la bagagerie, les dispositifs de navigations tel que le GPS, et les systèmes de diffusion sonore tel qu'un poste de radio ou un lecteur de disque compact.

Un autre but de l'invention est de simplifier la fixation à une motocyclette d'un dispositif d'arrimage d'accessoires.

Un autre but de l'invention est de proposer un dispositif d'arrimage universel quel que soit le modèle de la motocyclette.

Dans l'état de la technique on connaît principalement deux modes d'arrimage d'un accessoire à un réservoir d'une motocyclette.

Une première mise en oeuvre de l'état de la technique consiste à placer sur le réservoir de la motocyclette un tapis de réservoir. Le tapis est fixé à la motocyclette à l'aide de crochets et de sangles nécessitant pour leur mise en place un démontage au moins partiel de certains éléments du carénage de la motocyclette. Le tapis comporte sur sa face supérieure 3 ou 4 points d'ancrage permettant l'arrimage d'une sacoche. L'inconvénient de cette mise en oeuvre est d'une part la difficile mise en place du tapis de réservoir, difficulté variant selon les modèles de motocyclette. D'autre par la manipulation difficile des 3 ou 4 points d'ancrage de la sacoche, notamment avec des gants.

Une deuxième mise en oeuvre de l'état de la technique consiste à doter la sacoche d'aimants, ceux ci coopérant alors avec le réservoir métallique pour le maintient de la sacoche. Cette mise en oeuvre pose des problèmes de maintient en place de la sacoche, notamment en fonction de son poids, mais aussi d'usure des aimants, d'obligation d'avoir un réservoir en matériau ferromagnétique, et de détérioration du réservoir. Pour ce dernier point en effet, les aimants sont susceptibles d'attirer toutes les pièces et poussières métalliques situées dans leur entourage immédiat. Ses poussières se retrouvent alors entre le réservoir et la sacoche ce qui est susceptible de rayer le réservoir. Indépendamment de l'aspect esthétique, ces rayures peuvent provoquer une détérioration accélérée du réservoir par l'érosion de ses protections contre la rouille notamment.

Dans l'invention on résout ces problèmes en arrimant l'accessoire via le bouchon de réservoir, et plus particulièrement via la couronne de maintien du bouchon de réservoir. Le bouchon est principalement composé d'une couronne de maintient et d'une pièce mobile entre une position fermée et une position ouverte. La couronne sert alors de support à l'axe autour duquel la pièce mobile se déplace. Le dispositif selon l'invention est donc en forme de fer à cheval et recouvre partiellement la couronne de maintient du bouchon. Le dispositif selon l'invention n'affecte pas les déplacements de la partie mobile du bouchon. Le dispositif selon l'invention comporte des orifices permettant de le fixer en même temps que la couronne de réservoir en utilisant des boulons communs. Le dispositif selon l'invention comporte plusieurs paires d'orifices permettant une fixation sur plusieurs modèles de bouchon de réservoir.

Le dispositif selon l'invention comporte une interface d'arrimage, sur sa partie supérieure, sur laquelle il est possible d'arrimer un accessoire.

L'invention a pour objet un dispositif universel d'arrimage d'au moins un accessoire à un véhicule de type motocyclette, caractérisé en ce que:
- ledit dispositif est fixé à une couronne d'un bouchon de réservoir du véhicule,
- ledit dispositif se conforme à la couronne sans gêner l'ouverture du bouchon de réservoir et ayant une forme en U
- ledit dispositif comporte plusieurs paires, au moins 2, d'orifices le rendant apte à être fixé sur la majorité des modèles de bouchons de réservoir via au moins 2 boulons servant au maintient dudit dispositif et de la couronne, ledit dispositif étant alors rigidement fixé au véhicule,
- ledit dispositif comporte une interface d'arrimage d'un accessoire.

Avantageusement l'invention est aussi caractérisée en ce que le dispositif est symétrique par rapport à un plan vertical longitudinal découpant le réservoir en deux parties symétriques, cette symétrie étant à considérer lorsque le dispositif est en place sur le réservoir.

Avantageusement l'invention est aussi caractérisée en ce que une paire d'orifice comporte un orifice sur une branche du U et un orifice sur l'autre branche du U.

Avantageusement l'invention est aussi caractérisée en ce qu'il comporte 3 paires d'orifices.

Avantageusement l'invention est aussi caractérisée en ce que, pour une branche du U, les orifices de cette branche sont tels que pour un modèle de bouchon de réservoir donné il y en ait toujours au moins 1 en face d'un orifice de la couronne du bouchon lorsque le dispositif est en place sur ladite couronne.

Avantageusement l'invention est aussi caractérisée en ce que, le dispositif étant considéré en place sur le véhicule, pour une branche du U donné, les orifices sont alignés, l'orifice le plus en avant et l'orifice le plus en arrière sont circulaire, l'orifice central étant ovalisé selon un axe passant par les centres des orifices avant et arrière.

Avantageusement l'invention est aussi caractérisée en ce que l'interface d'arrimage de l'accessoire est un orifice coopérant avec un axe de l'accessoire, l'axe traversant le dispositif et l'accessoire et étant mobile, en rotation, entre une position verrouillée dans laquelle les dispositif et accessoire sont solidarisées, et une position libre dans laquelle l'accessoire est libéré du dispositif, l'axe étant inamovible de l'accessoire.

Avantageusement l'invention est aussi caractérisée en ce que la liaison entre les dispositif et accessoire est élastique.

Avantageusement l'invention est aussi caractérisée en ce que l'accessoire une fois en place sur le dispositif recouvre des moyens de fixation du dispositif coopérant à la fixation du dispositif sur le véhicule.

Avantageusement l'invention est aussi caractérisée en ce que l'axe comporte une tête antivol.

L'invention sera mieux comprise à la lecture de la description qui suit et à l'examen des figures qui l'accompagnent. Celles-ci sont présentées à titre indicatif et nullement limitatif de l'invention. Les figures montrent:
- figure 1 : un réservoir de motocyclette nu.
- figure 2: un réservoir de motocyclette sur lequel est fixé le dispositif selon l'invention.
- figure 3: un réservoir de motocyclette sur lequel sont fixées les le dispositif selon l'invention et un premier accessoire.
- figure 4: un réservoir de motocyclette sur lequel sont fixées le dispositif selon l'invention et un deuxième accessoire coopérant avec le premier.
- figure 5a: une vue de dessus du dispositif selon l'invention.
- figure 5b: une vue latérale du dispositif selon l'invention.
- figure 6a: une vue de dessus du premier accessoire.
- figure 6b: une vue latérale du premier accessoire.
- figure 7a: une vue de dessous du deuxième accessoire.
- figure 7b: une vue de dessus du deuxième accessoire.
- figure 8: une vue latérale d'un réservoir sur lequel est arrimée une sacoche grâce au dispositif selon l'invention.

Dans la description on considère que les éléments décrits sont latéralisés par rapport à la positon qu'ils occupent lorsqu'ils sont fixés sur un véhicule. Ainsi le haut d'un élément décrit correspond au haut du véhicule, le bas d'un élément au bas du véhicule, l'avant d'un élément correspond à l'avant du véhicule, l'arrière d'un élément correspond à l'arrière du véhicule.

D'une figure à l'autre des références identiques correspondent à des éléments identiques.

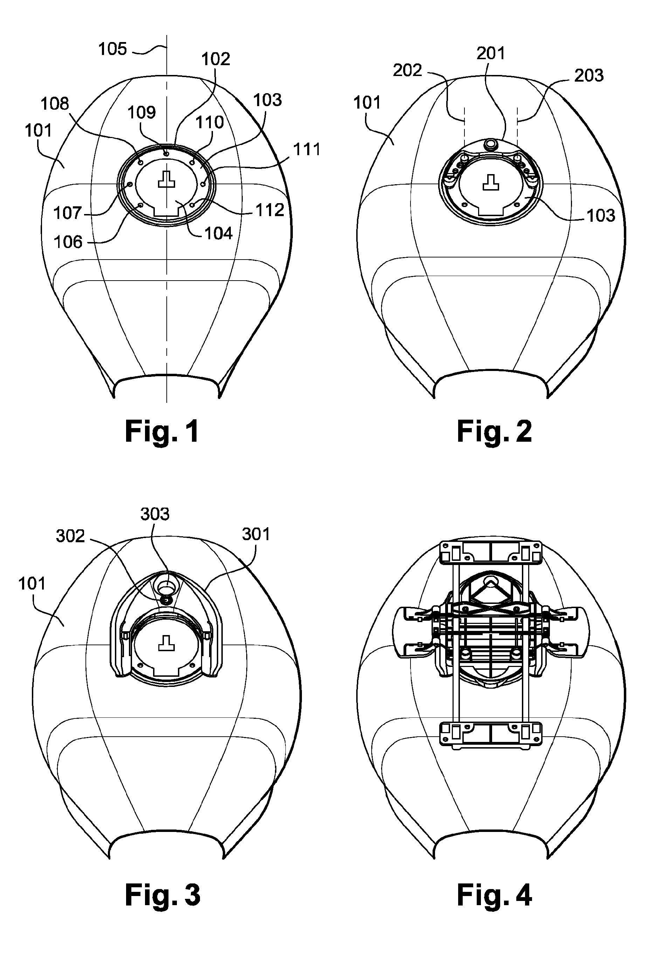

La figure 1 montre un réservoir 101 de motocyclette courante. Sur sa partie supérieure, le réservoir 101 comporte un bouchon 102. Le bouchon 102 comporte au moins une couronne 103 de maintient et une partie 104 mobile permettant l'ouverture et la fermeture du bouchon 104. La couronne 103 comporte, sur toute sa circonférence, des orifices permettant la fixation du bouchon 102 au réservoir 101. Cette fixation est réalisée à l'aide de boulons vissés dans le réservoir à travers lesdits orifices. D'une manière classique les orifices sont répartis sur la couronne du bouchon de manière symétrique par rapport à un plan 105 vertical longitudinal découpant le réservoir en deux parties symétriques l'une de l'autre. Dans l'exemple de l'invention la couronne comporte 7 orifices 106 à 112. Dans la pratique on trouve des couronnes ne comportant que 6 ou 5 orifices, sans que cela ne soit préjudiciable à la mise en oeuvre de l'invention.

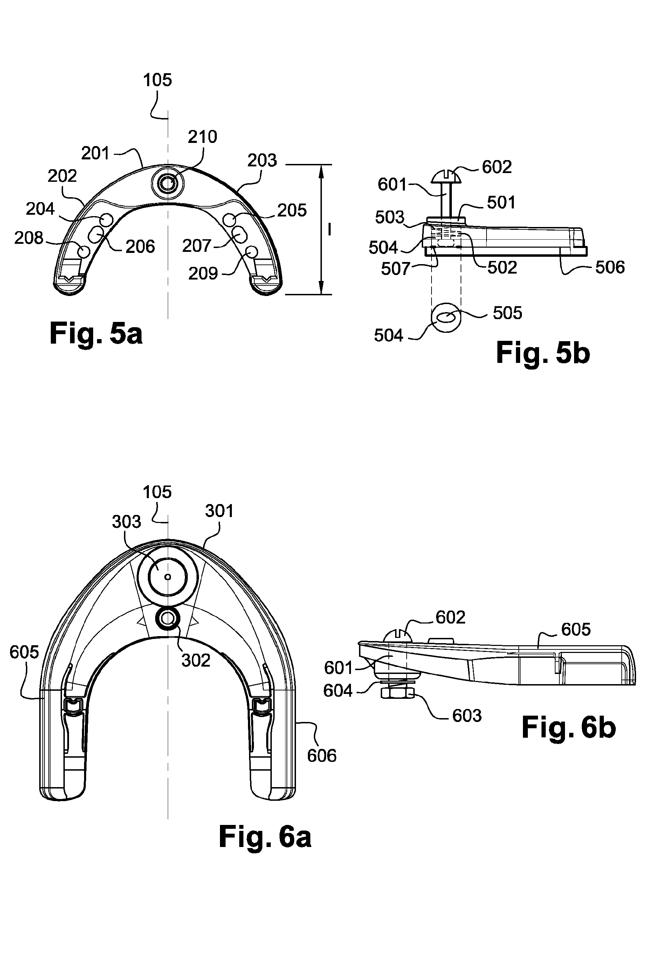

La figure 2 montre le réservoir 101 sur lequel est fixé un dispositif 201 selon l'invention. Cette fixation est rigide en ce sens qu'elle n'est pas élastique et réalisée à l'aide de visserie. Une fois fixée, il n'y a plus de jeux ni de glissement entre le dispositif selon l'invention et le réservoir. La figure 5a montre que le dispositif 201 est une pièce en une forme de U, ou de fer à cheval, telle qu'elle se conforme à la couronne 103 sur la partie avant de la couronne 103. La courbure de la pièce 201 n'excède pas le demi-cercle. La pièce 201 est elle aussi symétrique par rapport au plan 105. La structure en fer à cheval permet donc de définir 2 bras latéraux. Considérons le bras 202 latéral gauche, le bras 203 latéral droit étant symétrique par rapport au plan 105.

Le bras 202 comporte au moins un orifice 204 tel que cet orifice soit en face de l'orifice 108 lorsque la pièce 201 est placée sur la couronne 103. Un orifice 205 est alors situé en face de l'orifice 110. Les orifices 205, respectivement 110, sont symétriques aux orifices 202, respectivement 108, par rapport au plan 105.

De manière à pourvoir s'adapter à toutes couronnes de bouchon de réservoir connues, le bras 202 comporte aussi 2 autres orifices 206 et 208. Les orifices 204, 206 et 208 sont tels que pour un modèle de bouchon de réservoir donné il y en ait toujours au moins 1 en face d'un orifice de la couronne du bouchon lorsque la pièce 201 est en place sur ladite couronne. Les orifices de la pièce 201 sont débouchants.

Dans la pratique la pièce 201 a une longueur | valant sensiblement 6,2cm pour une largeur L valant sensiblement 11 cm. La largeur des bras vaut en moyenne 1,5cm. La circonférence interne de la pièce 201 se conforme à la circonférence interne de la couronne 103.

Dans la pratique l'orifice 204 est circulaire d'un diamètre sensiblement égal à 0,4cm et situé à une distance valant sensiblement 3,3 cm de la base de la pièce 201, et à une distance valant sensiblement 3 cm du plan 105. La base de la pièce 201 est un plan perpendiculaire au plan 105 et tangent à l'arrière de la pièce 201.

Dans la pratique l'orifice 206 est sensiblement circulaire d'un diamètre sensiblement égal à 0,4cm et situé à une distance valant sensiblement 2,6 cm de la base de la pièce 201, et à une distance valant sensiblement 3,5 cm du plan 105.

Dans la pratique l'orifice 208 est circulaire d'un diamètre sensiblement égal à 0,4cm et situé à une distance valant sensiblement 1,2 cm de la base de la pièce 201, et à une distance valant sensiblement 4,2 cm du plan 105.

Dans la pratique les centres des orifices 204, 206 et 208 sont alignés. Dans la pratique l'orifice 206 est ovalisé selon un axe passant par les centres des orifices 204 et 208. Selon cet axe le diamètre intérieur de l'orifice 206 est alors de sensiblement 0,8 cm.

Avec le modèle de réservoir de la description se sont donc les orifices (204, 108) et (205, 110) qui sont utilisés pour le vissage de deux boulons 202 et 203 servant à fixer la pièce 201 et la couronne 103 au réservoir 101. Ces boulons sont plus longs que ceux d'origines servant à fixer la couronne 103 au réservoir 101. En effet ces boulons traversent la pièce 201 et la couronne 103. Pour un autre modèle de motocyclette, donc de bouchon de réservoir, d'autres orifices parmi 204 à 209 sont utilisés. Dans la pratique la pièce 201 est fixé via au moins 2 orifices, un pour chaque bras.

La figure 5a montre aussi que la pièce 201 comporte, interceptant le plan 105, un orifice 210 circulaire. Cet orifice 210 est donc situé sur la partie avant de la pièce 201, de part et d'autre du plan 105 de symétrie. Cet orifice, avec la partie supérieure du dispositif selon l'invention forme une interface d'arrimage pour un accessoire.

La figure 5b montre une vue latérale de la pièce 201. La figure 5b illustre le fait que l'orifice 210 est la superposition de deux cylindres, un cylindre 501 supérieur ayant un diamètre interne sensiblement égal à 0,9cm pour une hauteur sensiblement égale à 0,2cm. Et un cylindre 502 inférieur, ayant le même axe que le cylindre 501. Le cylindre 502 a un diamètre interne sensiblement égal à 1,3cm pour une hauteur de 0,9cm. Le premier cylindre est réalisé par une excroissance sur la face supérieure de la pièce 201. Le deuxième cylindre est un évidemment de la pièce 201.

La figure 5b montre que le cylindre 502 comporte à l'intérieur des moyens 503 élastiques, manchon en plastic ou ressort, s'appuyant sur le premier cylindre 501. Le diamètre intérieur des moyens 503 est donc supérieur ou égal au diamètre du premier cylindre 501. Le diamètre extérieur des moyens 503 est donc inférieur ou égal au diamètre du deuxième cylindre 502. Dans sa partie inférieure le cylindre 502 comporte un plateau 504 circulaire apte à comprimer les moyens 503. Une fois le plateau 504 en place dans le cylindre 502, celui-ci est refermé par une couronne 504 de diamètre intérieur supérieur ou égal ou diamètre intérieur du cylindre 501. La couronne 501 est fixée à la pièce 201 à la base du cylindre 502.

Dans un exemple préféré le plateau 504 a une ouverture 505 interne de forme ovale.

La figure 5b montre aussi un joint élastique 506 situé sous la pièce 201. Ce joint est donc placé entre la motocyclette et la pièce 201 lors de la mise en place de la pièce 201 sur la motocyclette. Ce joint protège la motocyclette et confère une certaine élasticité à la liaison motocyclette pièce 201, ce qui a pour effet de prolonger la durée de vie du dispositif selon l'invention et du bouchon 102. Le joint 506 a la même forme en fer à cheval que la pièce 201. Le joint 506 comporte des orifices identiques aux orifices de la pièce 201.

La figure 3 montre un premier accessoire, ou pièce, 301 ledit premier accessoire étant fixé sur le réservoir 101.

La figure 6a montre la pièce 301 vue de dessus. La pièce 301 a une forme se conformant à la pièce 201, donc une forme en fer à cheval telle qu'une fois la pièce 301 en position celle-ci n'interfère pas avec l'ouverture et la fermeture du bouchon 102 de réservoir. La pièce 301 s'étend sur une plus grande longueur que la pièce 201. La pièce 301 est symétrique par rapport au plan 105. La pièce 301 est également plus large que la pièce 201.

La pièce 301 comporte, sur sa partie avant, un orifice 302, et devant l'orifice 302 et un orifice 303. Ces orifices sont alignés sur le plan 105. L'orifice 302 à un diamètre sensiblement égal au diamètre supérieur de l'orifice 210. L'orifice 302 est débouchant, c'est à dire qu'il traverse la pièce 301.

L'orifice 303 est situé devant l'orifice 302 est à un diamètre interne sensiblement égal à 2,1 cm. La partie supérieure de l'orifice 303 est conique. L'orifice 303 n'est pas débouchant.

Lorsque que la pièce 301 est en place sur la pièce 201, l'orifice 302 est en vis à vis de l'orifice 210.

La figure 6b montre que, dans une variante préférée de l'invention, la pièce 301 comporte un axe 601 traversant ladite pièce au niveau de l'orifice 302. L'axe comporte, sur sa partie supérieure une tête 602 dont le diamètre est supérieur au diamètre de l'orifice 302. L'axe 601 comporte sur sa partie inférieure une excroissance 603 de forme ovoïde. L'extension longitudinale de l'excroissance 603 est telle qu'elle passe à travers l'orifice 302 donc aussi à travers l'orifice 210. Une fois l'axe 601 en place sur la pièce 301, on sertit, sur la partie inférieure de l'axe 601 dépassant sous la pièce 301, une rondelle 604 empêchant l'extraction de l'axe 601 de la pièce 301.

Dans une certaine position l'excroissance 603 passe à travers l'orifice 505. Une fois passé à travers, il faut faire faire un quart de tour à l'axe 602 pour que l'excroissance ne passe plus à travers l'orifice 505. Ce dispositif permet donc de fixer ensemble les première et deuxième pièces 201 et 301. Le déverrouillage se fait en faisant faire un nouveau quart de tour à l'axe 601. Ces quarts de tour sont réalisés à l'aide d'un outil coopérant avec la tête 602. Cet outil est de type clé à 6 pans. Cependant il s'agit d'une clé à 6 pans spéciale ayant une empreinte particulière, ce qui permet de garantir que seule la personne en possession de la bonne clé à 6 pans peut faire faire les quarts de tour à l'axe 601. Il s'agit donc d'un dispositif antivol.

De manière évidente, le dispositif d'axe 601 est équivalent à un dispositif à clé. On peut donc utiliser une serrure à clé traditionnelle en lieu et place de l'axe 601.

La liaison ainsi réalisée entre les pièces 201 et 301 est élastique via les moyens 503. Cela permet une meilleure transmission des efforts et vibrations entre les dispositif 201 et pièce 301 et donc entre la motocyclette et la pièce 301, ce qui augmente durablement la fiabilité du dispositif selon l'invention.

Les figures 3, 6a et 6b montrent qu'une fois la pièce 301 fixée au dispositif 201, la pièce 301 recouvre complètement la pièce 201, et en particulier les orifices 304 à 209. Dans cette variante de l'invention, une fois la pièce 301 en place sur le dispositif 201, il n'est donc plus possible d'accéder aux écrous 202 et 203. Le premier, comportant les dispositif 201 et accessoire 301 est donc inamovible. Lorsque la pièce 301 est fixée au dispositif 201.

Les figures 6a et 6b montrent que la pièce 301 comporte, au niveau de sa surface supérieure des rails horizontaux 605 et 606. Ces rails courent le long de la pièce 301 symétriquement par rapport au plan 105.

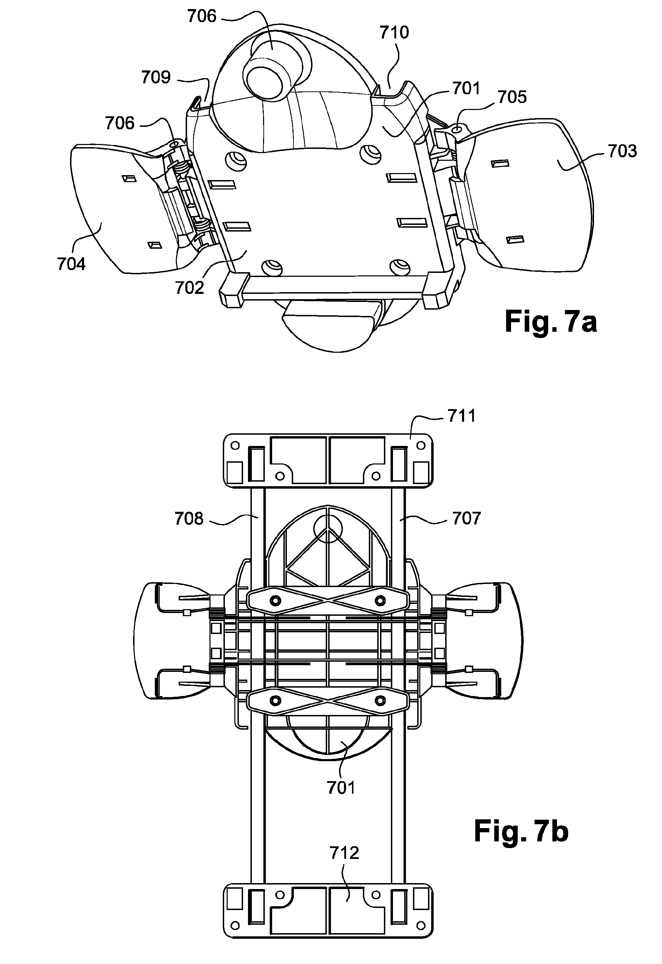

La figure 7a montre le deuxième accessoire 701. Le deuxième accessoire comporte donc un corps 702 essentiellement plan. L'accessoire 701 est symétrique par rapport au plan 105.

La figure 7a montre que le corps 701 comporte sur chacun de ses bords latéraux des ailettes 703 et 704 fixées au corps 702 via des axes 705 et 706 horizontaux et parallèles au plan 105. Les ailettes 703 et 704 sont donc mobiles en rotation autour des axes 705 et 706 entre une position basse et une position haute. Les ailettes sont contraintes en position basse pas des ressorts ou autres moyens élastiques. En position base les ailettes sont chacune dans un plan horizontal.

La figure 7a montre que le deuxième accessoire comporte sur sa partie inférieure avant une excroissance 706 cylindrique de dimensions la rendant apte à être introduite dans l'orifice 303.

La figure 4 montre le deuxième accessoire fixé au premier lui-même fixé sur le réservoir 101. Dans cette situation l'excroissance 706 est introduite dans l'orifice 303. Cela assure à la fois le positionnement correct et le maintient en place du deuxième accessoire sur la premier. Dans cette situation les ailettes 703 et 704 pincent les rails 605 et 606 contre le corps 702 pour assurer le maintient en place du deuxième accessoire. Les ailettes 703 et 704 forment dont avec le corps 702 deux pinces permettant d'enserrer la pièce 301.

Pour désolidariser les premier et deuxième accessoire il suffit alors de passer ses mains sous le deuxième accessoire, et en particulier sous les ailettes, et d'exercer une pression vers le haut. Cela aura pour conséquences d'ouvrir les pinces et de libérer le deuxième accessoire du premier.

La figure 7b montre le deuxième accessoire 701 vue de dessus. Le deuxième accessoire 701 comporte deux rails longitudinaux 707 et 708 coulissant dans des canaux 709 et 710 de la partie supérieure du corps 702. Les rails 708 sont de mêmes longueurs, parallèles est reliés à chacune de leurs extrémités par des plateaux rigides 711 et 712. C'est sur ces plateaux que sont fixés le ou les accessoires que l'on souhaite arrimer à la motocyclette via le dispositif selon l'invention.

La position des rails 707 et 708 est donc variable longitudinalement. La bonne position une fois trouvée, les rails sont maintenus en place par au moins une plaque vissée au corps 702 et maintenant les rails 707 et 708 en place par pression contre le fond des canaux 709 et 710. Dans la pratique le corps 702 comporte deux plaques, une à l'avant, l'autre à l'arrière, permettant de presser les rails au fond des canaux. La bonne position des rails est déterminer en fonction de l'encombrement de l'accessoire, du gabarit du pilote et tu modèle de la moto. Dans la pratique les accessoires sont soit des sacoches, soit des dispositifs GPS. Le réglage de la position des rails ne se fait en général qu'une fois.

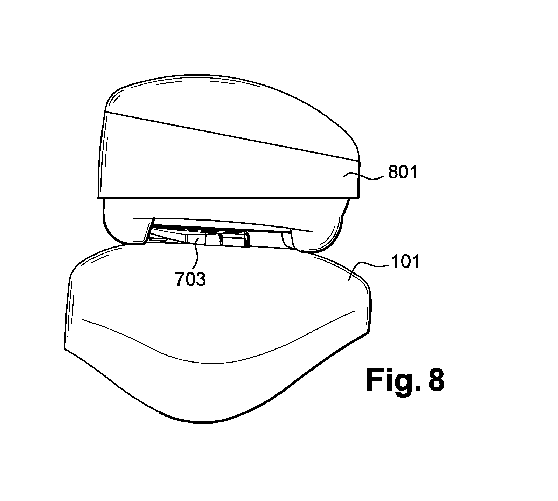

La figure 8 est une vue latérale du réservoir 101 sur lequel est fixée une sacoche 801 via un dispositif selon l'invention. La figure 8 montre bien l'ailette 703 située sous la sacoche 801 et au-dessus du réservoir 101, aisément accessible même avec des gants.

Dans cette description on a démontré l'intérêt de l'invention en illustrant son utilisation dans un cas particulier dans lequel un premier accessoire sert de d'accessoire d'arrimage à un deuxième accessoire.

Dans la pratique le dispositif selon l'invention peut directement servir à l'arrimage au deuxième accessoire. Il suffit pour cela que l'interface d'arrimage du dispositif selon l'invention soit compatible avec l'interface d'arrimage du deuxième accessoire. Un tel exemple consiste à réaliser la pièce 201 et la pièce 301 en une seule pièce traversée par les orifices 204 à 209. On peut donc envisager de nombreuses formes d'interfaces d'arrimage pour le dispositif selon l'invention. Dans ces cas l'orifice 210 devient facultatif et les boulons de fixation du dispositif selon l'invention restent accessibles.

Les orifices du dispositif selon l'invention peuvent être fusionnés jusqu'à ne plus former que 2 ou 1 orifice par branche du U. Dans ce cas il faut cependant prévoir un matériel très rigide pour le dispositif selon l'invention. Dans une mise en oeuvre préférée il est réalisé en aluminium. Dans d'autre mise en oeuvre il est réalisé en un autre métal ou en un plastic rigide.

## Revendications

1. Dispositif (201) universel d'arrimage d'au moins un accessoire (301, 801) à un véhicule de type motocyclette, **caractérisé en ce que**:
- ledit dispositif est fixé à une couronne (103) d'un bouchon de réservoir du véhicule,
- ledit dispositif se conforme à la couronne sans gêner l'ouverture du bouchon de réservoir et a une forme en U
- ledit dispositif comporte plusieurs paires, au moins 2 dont une est ovalisée, d'orifices le rendant apte à être fixé sur la majorité des modèles de bouchons de réservoir via au moins 2 boulons servant au maintient dudit dispositif et de la couronne, ledit dispositif étant alors rigidement fixé au véhicule,
- ledit dispositif comporte une interface d'arrimage d'un accessoire.

2. Dispositif selon la revendication 1, **caractérisé en ce qu'**il est symétrique par rapport à un plan (105) vertical longitudinal découpant le réservoir en deux parties symétriques, cette symétrie étant à considérer lorsque le dispositif est en place sur le réservoir.

3. Dispositif selon l'une des revendications 1 ou 2, **caractérisé en ce que** une paire d'orifice comporte un orifice sur une branche du U et un orifice sur l'autre branche du U.

4. Dispositif selon l'une des revendications 1 à 3, **caractérisé en ce qu'**il comporte 3 paires (204-205, 206-207, 208-209) d'orifices.

5. Dispositif selon la revendication 4, **caractérisée en ce que**, pour une branche du U, les orifices de cette branche sont tels que pour un modèle de bouchon de réservoir donné il y en ait toujours au moins 1 en face d'un orifice de la couronne du bouchon lorsque le dispositif est en place sur ladite couronne.

6. Dispositif selon l'une des revendications 4 ou 5, **caractérisé en ce que**, le dispositif étant considéré en place sur le véhicule, pour une branche du U donné, les orifices sont alignés, l'orifice le plus en avant et l'orifice le plus en arrière sont circulaire, l'orifice (206) centrale étant ovalisé selon un axe passant par les centres des orifices avant (204) et arrière (208).

7. Dispositif selon l'une des revendications 1 à 6 **caractérisé en ce que** l'interface d'arrimage de l'accessoire comporte un orifice (210) coopérant avec un axe (601) de l'accessoire, l'axe traversant le dispositif et l'accessoire et étant mobile, en rotation, entre une position verrouillée dans laquelle les dispositif et accessoire sont solidarisées, et une position libre dans laquelle l'accessoire est libéré du dispositif, l'axe étant inamovible de l'accessoire.

8. Dispositif selon l'une des revendications 1 à 7, **caractérisé en ce que** la liaison entre les dispositif et accessoire est élastique (503).

9. Dispositif selon l'une des revendications 7 ou 8, **caractérisé en ce que** l'accessoire une fois en place sur le dispositif recouvre des moyens de fixation du dispositif coopérant à la fixation du dispositif sur le véhicule.

10. Dispositif selon l'une des revendications 7 à 9, **caractérisé en ce que** l'axe comporte une tête (602) antivol.
